# EUROPÄISCHE PATENTSCHRIFT

(11) **EP 3 917 830 B1**
(45) Veröffentlichungstag und Bekanntmachung des Hinweises auf die Patenterteilung: **08.03.2023**
(21) Anmeldenummer: 20703947.0
(22) Anmeldetag: 27.01.2020
(51) Int. Cl.: B64C 1/36

(54) **ANBAUGEHÄUSE ZUR BEFESTIGUNG AN EINEM LUFTFAHRZEUG**
ATTACHMENT HOUSING FOR FASTENING TO AN AIRCRAFT
BOÎTIER RAPPORTÉ DESTINÉ À ÊTRE FIXÉ SUR UN AÉRONEF

(30) Priorität: 29.01.2019 DE 102019201103
(43) Veröffentlichungstag der Anmeldung: 08.12.2021
(73) Patentinhaber: Lufthansa Technik AG, 22335 Hamburg (DE)
(72) Erfinder: THOMASCHEWSKI, Oliver, 22846 Norderstedt (DE); ADUGNA, Tobias, 22850 Norderstedt (DE)
(74) Vertreter: Müller Verweyen
(86) Internationale Anmeldenummer: PCT/EP2020/051935
(87) Internationale Veröffentlichungsnummer: WO 2020/157011

(56) Entgegenhaltungen:
- WO-A2-2011/007164
- US-A1- 2009 321 572
- US-A1- 2016 172 748
- US-B1- 8 063 837

## Beschreibung

Die vorliegende Erfindung betrifft ein Anbaugehäuse zur Befestigung an einer Außenseite eines Luftfahrzeugs, wobei das Anbaugehäuse einen Funktionsraum umschließt, sowie ein Luftfahrzeug mit einem derartigen Anbaugehäuse.

Moderne Luftverkehrsmittel sind in der Regel mit sensiblen elektronischen Bauteilen bestückt, die Sensor- und Sendefunktionen bereitstellen können wie etwa Radar oder Funkantennenanlagen. Diese Bauteile sind in der Regel nicht im druckbeaufschlagten Kabinenbereich, sondern im Außenbereich des Luftverkehrsmittels positioniert. Damit diese sensiblen Bauteile nicht direkt der Umgebung und damit Wind, Regen, Schnee, Eis, Enteisungsmittel, Schmutz- und Schwebepartikeln ausgesetzt sind, werden sie von drucklosen Gehäusen geschützt. Diese drucklosen Gehäuse können als integraler Bestandteil des Flugzeugrumpfes ausgeführt sein oder auch als aerodynamisch geformte kuppelartige, am Flugzeugrumpf oder Auslegern befestigte Gehäuse. So sind Radarsensoren oftmals in sogenannten Radomen insbesondere an der Rumpfnase untergebracht.

Nicht nur bordeigene Kommunikationstechnik und flugrelevante Technik, sondern auch wissenschaftliche oder sicherheitstechnische Sensoren können in Schutzgehäusen an dem Luftverkehrsmittel befestigt sein, beispielsweise thermische Sensoren oder Kameras zur Erdbeobachtung.

Radome sind regelmäßig keine Druckgehäuse und nur für geringe Druckdifferenzen zur Umgebung bzw. Atmosphäre ausgelegt. Um Schäden an den Bauteilen und auch an den inneren Strukturen der Schutzgehäuse zu vermeiden, müssen große Luftdruckgradienten zwischen dem Innenbereich der Schutzgehäuse und der Umgebung vermieden werden. Die Belüftung der Gehäuse ist in der Regel durch einfache Durchgangsöffnungen gebildet.

Daher ist es notwendig, dass während des Steigflugs kontinuierlich Luft an die Umgebung abgegeben wird, um keinen relevanten Überdruck aufzubauen. Ebenso muss im Sinkflug entsprechend Luft aus der Atmosphäre in das Schutzgehäuse strömen.

Zum Schutz gegen beschädigte Bauteile oder sogar Strukturversagen des Gehäuses durch kritischen Überdruck, der beispielsweise bei einer Leckage zwischen Rumpf und Gehäuse auftreten kann, sind zudem ausreichende Flächen in der Gehäusewand vorgesehen, die eine schlagartige Entlüftung ermöglichen. Eine solche schlagartige Entlüftung kann beispielsweise im Falle eines Druckverlusts in der Kabine erforderlich sein, sofern die Leckage der Kabine von dem Anbaugehäuse überdeckt wird.

Es ist dabei kaum vermeidbar, dass durch die vorgesehenen Durchgangsöffnungen, die einen großen Luftaustausch ermöglichen, Flüssigkeit, Feuchtigkeit und Schmutz in das Gehäuse gelangen und dort aggregieren können. Die elektronischen Komponenten leiden dabei unter Verschmutzung und Feuchtigkeit, was zu Leistungseinschränkungen bis hin zu Ausfällen führt. Zudem zeigt sich in der Praxis eine erhöhte Tendenz zu Korrosion, was massive Schäden an den inneren Strukturen und Komponenten hervorrufen kann. Das führt zu engen Wartungsintervallen und erhöhten Reparaturkosten für derartige drucklose Gehäuse.

Die US 8 063 837 B1 offenbart beispielsweise ein System mit einem Antennenmodul, welches eine Grundplatte, eine Flugzeugantenne und ein Radom umfasst. Das Radom ist mit der Grundplatte verbunden, wodurch ein Gehäuse zur Unterbringung einer oder mehrere Flugzeugantennen gebildet wird. Unterhalb der Grundplatte ist eine druckfeste Montageplatte vorgesehen, die so konfiguriert ist, dass sie mit dem Rumpf eine Dichtung bildet, um den Druck innerhalb des Flugzeugs aufrecht zu halten. Zwischen der Grundplatte und der Montageplatte kann ein wetterfestes Gehäuse gebildet sein.

Vor diesem Hintergrund liegt der Erfindung die Aufgabe zugrunde, ein Anbaugehäuse zur Befestigung an einem Luftfahrzeug bereitzustellen, welches einen verbesserten Schutz für darin aufgenommene elektrische Bauteile und einen verringerten Wartungs- und Reparaturaufwand ermöglicht.

Zur Lösung der Aufgabe wird erfindungsgemäß ein Anbaugehäuse zur Befestigung an einem Luftfahrzeug mit den Merkmalen von Anspruch 1 und ein Flugzeug mit einem derartigen Anbaugehäuse vorgeschlagen. Weitere bevorzugte Weiterentwicklungen sind den Unteransprüchen, den Figuren und der zugehörigen Beschreibung zu entnehmen.

Gemäß dem Grundgedanken der Erfindung wird ein Anbaugehäuse zur Befestigung an der Außenseite eines Luftfahrzeugs vorgeschlagen, wobei das Anbaugehäuse einen Funktionsraum an der Außenseite des Luftfahrzeugs bildet. Der Funktionsraum ist dabei zweigeteilt und umfasst einen Belüftungsraum zum Luftaustausch mit der Umgebung und einen Schutzraum. Zwischen dem Belüftungsraum und dem Schutzraum ist eine Trennwand vorgesehen, in der mindestens eine Durchgangsöffnung zum Luftaustausch zwischen dem Belüftungsraum und dem Schutzraum vorgesehen ist. Die Durchgangsöffnung ist so eingerichtet, das sie einem Eindringen von Wasser, Feuchtigkeit und/oder Partikeln insbesondere vom Belüftungsraum in den Schutzraum entgegenwirkt.

Durch die Unterteilung des Funktionsraums in zwei abgetrennte Bereiche wird die Schutzfunktion für elektrische Bauteile und die Luftdruckausgleichsfunktion, insbesondere für die schlagartige Entlüftung, voneinander entkoppelt. Die empfindliche Elektronik ist in dem Schutzraum beispielsweise gegen Schlagwasser durch Regen oder Enteisung optimal geschützt.

Eine Wechselwirkung des Funktionsraums mit der Umgebung erfolgt nur über den Belüftungsraum. Dabei findet ein Luftaustausch statt, der zwar auch Feuchtigkeit und Schmutz in den Belüftungsraum einträgt und dort aggregieren kann, was jedoch an dieser Stelle unschädlich ist. Die Belüftung in die Atmosphäre kann daher relativ frei gestaltet werden, um einen optimalen Luftaustausch und gute schlagartige Entlüftung bei plötzlichem Druckverlust zu ermöglichen.

Eine Be- und Entlüftung des Schutzraums erfolgt vorteilhaft ausschließlich über die Trennwand zwischen dem Schutzraum und dem Belüftungsraum durch die mindestens eine Durchgangsöffnung. Zur Atmosphäre hin ist der Schutzraum im Übrigen vollständig luftdicht abgeschlossen.

Der Schutzraum ist demnach vorteilhaft durch die insbesondere plattenförmige Trennwand gegen den Belüftungsraum und durch ein starres luftundurchlässiges Gehäuse gegen die Umgebung abgegrenzt.

Ein derartiges Anbaugehäuse ist unabhängig von der Rumpfposition an der Außenseite des Luftfahrzeugs positionierbar. So kann es beispielsweise an der Oberseite oder an der Unterseite des Rumpfes angebracht sein. Das Gehäuse ist vorzugsweise strömungstechnisch vorteilhaft geformt und größentechnisch auf den Platzbedarf der zu installierenden Elektronik angepasst.

Vorzugsweise ist in einem Zustand, in dem das Anbaugehäuse am Luftfahrzeug montiert ist, der Belüftungsraum der Außenseite des Luftfahrzeugs zugewandt und der Schutzraum der Außenseite des Luftfahrzeugs abgewandt. Der Belüftungsraum ist somit vorteilhaft zwischen der Außenseite des Flugzeugs und dem Schutzraum angeordnet. Aufgrund der Anordnung des Belüftungsraums zwischen der Außenseite des Flugzeugs und dem Schutzraum ist der Schutzraum vorteilhaft mit einem positiven Abstand zu der Außenseite des Flugzeugs angeordnet. Diese Anordnung von Schutzraum und Belüftungsraum erlaubt eine zweckmäßige Ausnutzung des zur Verfügung stehenden Bauraums bei gleichzeitig effizienter Belüftung des Belüftungsraums.

In einer besonders vorteilhaften Ausführungsform ist der oder jeder Durchgangsöffnung in der Trennwand eine semi-permeable Membran zugeordnet, die einerseits Luftaustausch zwischen dem Belüftungsraum und Schutzraum ermöglicht, aber andererseits dem Eindringen von Flüssigkeit, insbesondere Wasser in flüssiger Form, wie beispielsweise Wassertropfen jeder Größe, und/oder Partikel von dem Belüftungsraum in den Schutzraum entgegenwirkt. Eine semi-permeable Membran stellt die erfindungsgemäße Funktionalität der Trennwand einfach und zuverlässig sicher. Die semi-permeable Membran dichtet vorteilhaft sämtliche Durchgangsöffnungen der Trennwand ab. Dabei lässt die Membran lediglich Luftaustausch, aber keinen Feuchtigkeits- und Partikeltransport zu. Derartige atmungsaktive und wasserundurchlässige Membranen oder Textilien sind kommerziell erhältlich und werden industriell genutzt. Dadurch ist auf einfache Weise eine sehr effektive Abscheidevorrichtung für die Durchgangsöffnungen in der Adapterplatte gebildet, so dass ein sehr trockener und sauberer Schutzraum mit kontrollierter Belüftung für die elektrischen Komponenten und ein gut belüfteter Belüftungsraum gebildet sind. Die Membran ist mit den weiter unten erläuterten geometrischen Maßnahmen kombinierbar, jedoch ist die Funktionsweise der semi-permeablen Membran derart effektiv, dass die Membran in Kombination mit einfachen Durchgangsöffnungen kombiniert werden kann, was die Herstellung und Wartung vereinfacht und vergünstigt.

Die Durchgangsöffnung kann durch einen einfachen, beispielsweise kreisrunden Kanal gebildet sein; die erfindungsgemäße semi-permeable Funktionalität kann dann beispielsweise durch geeignete Querschnittsbemessung der Kanäle erreicht werden.

Die Durchgangsöffnung kann in einer bevorzugten Weiterentwicklung auch eine andere Geometrie aufweisen, etwa als Kanal ohne durchgehende Achse, zum Beispiel mit einem geknickten, oder allgemeiner labyrinthartigen, Verlauf. Dies ermöglicht in einfacher Weise einen Labyrinthabscheider für etwaig vorhandene Schmutzteilchen.

Weiter bevorzugt bildet die Durchgangsöffnung in der Trennwand eine Labyrinthöffnung, so dass Schmutz und Flüssigkeit durch geometrische Barrieren am Eindringen in den Schutzraum gehindert werden (Labyrinthdichtung). Die Labyrinthöffnung kann auch als Kondensationsvorrichtung für Luftfeuchtigkeit genutzt werden, wobei vorteilhaft ein Ablauf für das Kondenswasser vorgesehen ist. Im Gegensatz zur Belüftungseinrichtung zwischen Belüftungsraum und Atmosphäre, die plötzlichem Druckabfall standhalten muss und daher besonders strömungstechnisch günstig und widerstandsarm ausgeführt sein muss, kann die Belüftung des Schutzraums zur Abscheidung von Feuchtigkeit, Flüssigkeit und Schmutzpartikeln ausgeprägt labyrinthartig sein und entsprechend viele geometrische Barrieren bilden.

In anderen bevorzugten Ausführungsformen ist in der Durchgangsöffnung mindestens eine Abscheidevorrichtung zum Abscheiden von Feuchtigkeit, Flüssigkeit und/oder Partikeln vorgesehen. Weiter bevorzugt ist die Durchgangsöffnung mit einem Partikelfilter versehen. Dieser kann beispielsweise durch Fasermatte oder Metallgitter gebildet sein. Dadurch werden der Schutzraum und die Funktionsbauteile noch besser vor Eindringen von Schmutzpartikeln und Schwebstoffen geschützt. Vorzugsweise umfasst die Trennwand auf der dem Schutzraum zugewandten Seite einen Bereich, in dem elektronische Funktionsbauteile befestigt werden können. In diesem Bereich ist die mechanische Anbindung der Funktionsbauteile vorgesehen, zum Beispiel über Schraub-, Klemm- oder sonstige Verbinder.

Weiter bevorzugt sind elektrische Verbindungen, für in dem Schutzraum installierte elektrische Funktionsbauteile, mittels Dichtungsverbindung durch die Trennwand geführt. Dadurch ist gewährleistet, dass der Luftaustausch nur über die dafür vorgesehenen Durchgangsöffnungen geschieht und dass nicht über simple Kabeldurchführungen Feuchtigkeit und Flüssigkeit in den Schutzraum und an die Elektronik gelangen kann.

Vorzugsweise umfasst die Trennwand an der dem Belüftungsraum zugewandten Seite Befestigungsvorrichtungen zur Befestigung des Anbaugehäuses an der Außenseite eines Luftfahrzeugs. Die Befestigungen an der Trennwand wirken dabei mit entsprechenden Befestigungen an der Außenseite des Rumpfes zusammen. Die äu-ßere Hülle des Anbaugehäuses ist somit vorteilhaft frei von Befestigungen mit dem Rumpf, wie zum Beispiel Scharnieren oder Schraubverbindungen, und erfährt auch keine entsprechenden mechanischen Belastungen. Die äußere Hülle wird ebenfalls von der Trennwand getragen und schließt luftdicht mit dieser ab.

Die äußere Hülle bildet im Bereich des Belüftungsraums eine Umgebungswand, insbesondere in Form einer Schürze, welche diesen gegenüber der Umgebung abgrenzt und vorzugsweise in einem am Luftfahrzeug montierten Zustand an der Außenseite des Luftfahrzeugs anliegt. In der Umgebungswand ist mindestens eine Belüftungsöffnung für den Luftaustausch zwischen Belüftungsraum und Atmosphäre vorgesehen.

Ferner umfasst ein Luftfahrzeug erfindungsgemäß ein derartiges Anbaugehäuse, das an der Außenseite des Luftfahrzeugs befestigt oder befestigbar ist.

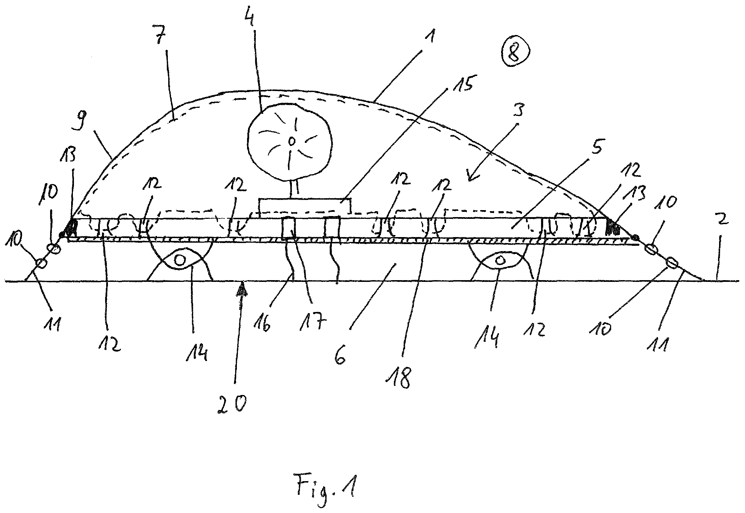

Die Erfindung wird im Folgenden anhand bevorzugter Ausführungsformen unter Bezugnahme auf die beigefügten Figuren erläutert. Dabei zeigt
- Fig. 1: einen schematischen Schnitt durch ein erfindungsgemäßes Anbaugehäuse.

In dem in Fig. 1 dargestellten Ausführungsbeispiel ist ein erfindungsgemäßes Anbaugehäuse 1 an der Außenseite 2 eines Luftfahrzeugs angebracht. Das Anbaugehäuse 1 liegt an der Außenseite 2 des Luftfahrzeugs an und bildet im Inneren einen Funktionsraum 3. Dieser Funktionsraum ist dazu vorgesehen, elektrische Funktionsbauteile 4 aufzunehmen. Dies können beispielsweise Radarsysteme, Funkanlagen oder wissenschaftliche oder überwachungstechnische Sensoren wie Kameras zur Erdbeobachtung sein. In Fig. 1 ist schematisch eine Funkantennenanlage dargestellt. Derartige elektronische Funktionsbauteile sind zumeist anfällig für Verschmutzung und Feuchtigkeit, die zu Leistungseinschränkungen bis hin zu Ausfällen führen können.

Das Außengehäuse ist typischerweise strömungstechnisch günstig geformt, um den entstehenden Luftwiderstand möglichst gering zu halten und die Flugstabilität eines Luftfahrzeugs nicht einzuschränken. Durch eine vorteilhaft plattenförmige Trennwand 5 ist der Funktionsraum 3 in zwei separate Bereiche unterteilt. Es sind ein Belüftungsraum 6 an der der Außenseite 2 des Luftfahrzeugs zugewandten Seite der Trennwand 5 und ein Schutzraum 7 an der der Außenseite 2 des Luftfahrzeugs abgewandten Seite der Trennwand 5 gebildet.

Der Belüftungsraum 6 erstreckt sich über die ganze Fläche unterhalb der Trennwand 5 und des Schutzraums 7, wobei der Schutzraum 7 in der Regel ein deutlich größeres Volumen aufweisen kann als der Belüftungsraum 6. Der Schutzraum 7 wird durch die Trennwand 5 gegenüber dem Belüftungsraum 6 abgegrenzt und durch die Gehäusebegrenzung 9 gegenüber der Umgebung 8 der Atmosphäre abgegrenzt. Die Gehäusebegrenzung 9 ist dabei durch ein luftundurchlässiges, vorteilhaft starres Material gebildet, beispielsweise beschichtetes Metall oder Faserverbundwerkstoff.

Um Schäden an der Elektronik 4 zu vermeiden, müssen große Luftdruckgradienten zwischen dem Innenbereich des Funktionsraums 3 und der Umgebungsatmosphäre 8 vermieden werden. Deshalb ist es notwendig, während des Steigflugs des Luftfahrzeugs kontinuierlich Luft an die Umgebung 8 abzugeben. Entsprechend muss im Sinkflug Luft aus der Umgebungsatmosphäre 8 in den Funktionsraum 3 strömen können.

Die Belüftung des Funktionsraumes 3 gegenüber der Umgebung 8 wird dabei durch Belüftungsöffnungen 10 gewährleistet, die in einem schürzenartigen Bereich 11 des Gehäuses 1 einen Luftaustausch zwischen der Umgebungsatmosphäre 8 und dem Belüftungsraum 6 ermöglichen. Um einen möglichst guten Luftaustausch zu gewährleisten und einer plötzlichen schlagartigen Entlüftung standzuhalten, die durch Leckage der druckbeaufschlagten Kabine im Bereich des Anbaugehäuses entstehen kann, sind die Belüftungsöffnungen 10 besonders strömungstechnisch günstig und widerstandsarm ausgeführt.

Beispielsweise durch geometrische Barrieren kann das Eindringen von Schlagwasser, zum Beispiel Regen, oder von Schmutzpartikeln durch die Belüftungsöffnungen 10 zu einem Großteil vermieden werden. Dennoch ist es an dieser Stelle kaum zu vermeiden, dass Feuchtigkeit und Schmutz in den Belüftungsraum 6 eindringen und dort aggregieren können. Um eine schlagartige Entlüftung zu ermöglichen, kann in einem Bereich, wo die Schürze 11 an der Außenseite 2 des Luftfahrzeugs anliegt, vorteilhaft eine Gummilippe 19 vorgesehen sein, die sich bei einem hohen Druckgradienten zwischen Belüftungsraum 6 und Umgebungsatmosphäre 8 öffnet und einen erhöhten Luftaustausch ermöglicht.

Die Trennwand 5 ist in dem gezeigten Ausführungsbeispiel vorteilhaft durch eine Adapterplatte gebildet, die als mechanischer Träger für das gesamte Anbaugehäuse 1 dient. An den Rändern der Adapterplatte 5 ist das starre Gehäuse 9 vorzugsweise luftdicht mit der Adapterplatte 5 verbunden und bildet dadurch den abgeschlossenen Schutzraum 7. An der der Außenseite 2 des Luftfahrzeugs zugewandten Seite der Adapterplatte 5 sind Befestigungsvorrichtungen 13 vorgesehen, mit denen das gesamte Anbaugehäuse 1 an entsprechenden Befestigungsvorrichtungen 14 befestigt werden kann, zum Beispiel über Schraub-, Schnapp- und/oder Klemmverschlüsse.

Auf der dem Schutzraum 7 zugewandten Seite der Adapterplatte 5 ist ein Bereich 15 vorgesehen, in dem die Funktionselektronik 4 befestigt werden kann. Für die Befestigung der Funktionsbauteile 4 können wiederum den Anforderungen angepasste Verbinder vorgesehen sein, zum Beispiel Schraub-, Schnapp- und/oder Klemmverbinder. Für die elektronische Anbindung der Funktionsbauteile 4 verlaufen elektrische Anbindungen, zum Beispiel in Form von Kabeln 16, von der Außenseite 2 bis zur Adapterplatte 5 und werden mittels vorteilhaft abgedichteten Kabeldurchführungen oder Dichtungsverbindungen 17 durch die Trennwand 5 geführt.

Auch aus dem Schutzraum 7 heraus und in den Schutzraum 7 hinein muss ein Luftaustausch stattfinden können. Dieser wird durch Belüftungslöcher 12 gewährleistet, die in der Trennwand 5 zwischen dem Belüftungsraum 6 und dem Schutzraum 7 gebildet sind. In dem gezeigten Ausführungsbeispiel sind die Belüftungslöcher 12 durch einfache Bohrungen realisiert.

Um einen effektiven Schutz vor dem Eindringen von Feuchtigkeit, Flüssigkeit und/oder Schmutzpartikeln in den sensiblen Bereich des Schutzraums 7 zu verhindern, ist auf der Seite der Adapterplatte 5, die dem Belüftungsraum 6 zugewandt ist, eine semi-permeable Membran 18 vorgesehen, die alle Belüftungslöcher 12 verschließt. Diese Membran 18 ist luftdurchlässig, aber gleichzeitig wasserabweisend und bietet einen optimalen Schutz vor einem Eindringen von flüssigem Wasser, insbesondere Wassertropfen aller Größe, und Schmutzpartikeln in Richtung des Schutzraums 7. Nur an den Positionen der Kabeldurchführungen 16 muss die Membran 18 unterbrochen sein. Da Dichtungsverbindungen 17 verwendet werden, kann aber auch an dieser Stelle keine Feuchtigkeit in den Schutzraum eindringen.

Durch die semi-permeable Membran 18 als optimale Abscheidevorrichtung für Flüssigkeit und/oder Partikel ist zum einen ein sauberes Volumen (gestrichelte Linie) im Schutzraum 7 gebildet und empfindliche Funktionselektronik 4 und korrosionsgefährdete Komponenten können ohne weitere Schutzmaßnahmen installiert werden. Zum anderen stellt der Belüftungsraum 6 ein sehr gut belüftetes Volumen dar, in dem sich Feuchtigkeit und Schmutzpartikel ohne Schäden an der Elektronik sammeln können und das einen hohen Luftaustausch mit der Umgebungsatmosphäre 8 bietet.

## Patentansprüche

1. Anbaugehäuse (1) zur Befestigung an einer Außenseite (2) eines Luftfahrzeugs, wobei das Anbaugehäuse (1) einen Funktionsraum (3) umschließt, wobei der Funktionsraum (3) zweigeteilt ist und einen Belüftungsraum (6) und einen Schutzraum (7) umfasst, wobei der Belüftungsraum (6) mittels einer Umgebungswand (11) gegenüber der Umgebung (8) abgegrenzt ist, **dadurch gekennzeichnet, dass** die Umgebungswand (11) mindestens eine Belüftungsöffnung (10) zum Luftaustausch zwischen dem Belüftungsraum (6) und der Umgebung (8) aufweist, wobei zwischen dem Belüftungsraum (6) und dem Schutzraum (7) eine Trennwand (5) vorgesehen ist, in der mindestens eine Durchgangsöffnung (12) zum Luftaustausch zwischen Belüftungsraum (6) und Schutzraum (7) vorgesehen ist, wobei die Durchgangsöffnung (12) so eingerichtet ist, dass sie einem Eindringen von Wasser, Feuchtigkeit und/oder Partikeln in den Schutzraum (7) entgegenwirkt.

2. Anbaugehäuse nach Anspruch 1, **dadurch gekennzeichnet, dass** in einem am Luftfahrzeug montierten Zustand der Belüftungsraum (6) der Außenseite (2) des Luftfahrzeugs zugewandt und der Schutzraum (7) der Außenseite (2) des Luftfahrzeugs abgewandt ist.

3. Anbaugehäuse nach Anspruch 2, **dadurch gekennzeichnet, dass** der Schutzraum (7) mit einem positiven Abstand zu der Außenseite (2) des Luftfahrzeugs angeordnet ist.

4. Anbaugehäuse nach einem der vorangehenden Ansprüche,
**dadurch gekennzeichnet, dass** der oder jeder Durchgangsöffnung (12) eine semi-permeable Membran (18) zugeordnet ist.

5. Anbaugehäuse nach einem der vorangehenden Ansprüche, **dadurch gekennzeichnet, dass** die Durchgangsöffnung (12) eine Labyrinthöffnung oder Labyrinthdichtung bildet.

6. Anbaugehäuse nach einem der vorangehenden Ansprüche, **dadurch gekennzeichnet, dass** in der Durchgangsöffnung (12) mindestens eine Abscheidevorrichtung zum Abscheiden von Feuchtigkeit, Flüssigkeit und/oder Partikeln vorgesehen ist.

7. Anbaugehäuse nach einem der vorangehenden Ansprüche, **dadurch gekennzeichnet, dass** der Durchgangsöffnung (12) ein Partikelfilter zugeordnet ist.

8. Anbaugehäuse nach einem der vorangehenden Ansprüche, **dadurch gekennzeichnet, dass** die Trennwand (5) auf der dem Schutzraum (7) zugewandten Seite einen Bereich (13) umfasst, in dem elektronische Bauteile (4) befestigt werden können.

9. Anbaugehäuse nach einem der vorangehenden Ansprüche, **dadurch gekennzeichnet, dass** elektrische Verbindungen (16) für in dem Schutzraum (7) installierte elektrische Bauteile (4) mittels Dichtungsverbindung (17) durch die Trennwand (5) geführt sind.

10. Anbaugehäuse nach einem der vorangehenden Ansprüche, **dadurch gekennzeichnet, dass** die Trennwand (5) an der dem Belüftungsraum (6) zugewandten Seite mindestens eine Befestigungsvorrichtung (14) zur Befestigung des Anbaugehäuses (1) an einer Außenseite (2) eines Luftfahrzeugs umfasst.

11. Anbaugehäuse nach einem der vorangehenden Ansprüche,
**dadurch gekennzeichnet, dass** die Umgebungswand (11) die Form einer Schürze hat.

12. Anbaugehäuse nach einem der vorangehenden Ansprüche,
**dadurch gekennzeichnet, dass** die Umgebungswand (11) dazu ausgebildet ist, in einem am Luftfahrzeug montierten Zustand an der Außenseite (2) des Luftfahrzeugs anzuliegen.

13. Anbaugehäuse nach einem der vorangehenden Ansprüche,
**dadurch gekennzeichnet, dass** der Schutzraum (7) durch die Trennwand (5) gegen den Belüftungsraum (6) und durch ein luftundurchlässiges Gehäuseteil (9) gegen die Umgebung (8) abgegrenzt ist.

14. Luftfahrzeug mit einem an einer Außenseite befestigten Anbaugehäuse nach einem oder mehreren der vorangehenden Ansprüche.

## Claims

1. Attachment housing (1) for fastening to an exterior side (2) of an aircraft, wherein the attachment housing (1) encloses a functional compartment (3), wherein the functional compartment (3) is divided in two and comprises a ventilation compartment (6) and a protective compartment (7), wherein the ventilation compartment (6) is separated from the environment (8) by means of a surrounding wall (11), **characterized in that** the surrounding wall (11) comprises at least one ventilation opening (10) for air exchange between the ventilation compartment (6) and the environment (8), wherein a dividing wall (5) is provided between the ventilation compartment (6) and the protective compartment (7), in which dividing wall (5) at least one passage opening (12) is provided for air exchange between the ventilation compartment (6) and the protective compartment (7), wherein the passage opening (12) is arranged in such a way that it counteracts penetration of water, moisture and/or particles into the protective compartment (7).

2. Attachment housing according to claim 1, **characterized in that**, in a state mounted on the aircraft, the ventilation compartment (6) faces the exterior side (2) of the aircraft and the protective compartment (7) faces away from the exterior side (2) of the aircraft.

3. Attachment housing according to claim 2, **characterized in that** the protective compartment (7) is arranged at a positive distance from the exterior side (2) of the aircraft.

4. Attachment housing according to one of the preceding claims, **characterized in that** a semi-permeable membrane (18) is assigned to the or each passage opening (12).

5. Attachment housing according to one of the preceding claims, **characterized in that** the passage opening (12) forms a labyrinth opening or labyrinth seal.

6. Attachment housing according to one of the preceding claims, **characterized in that** at least one separating device for separating moisture, liquid and/or particles is provided in the passage opening (12).

7. Attachment housing according to one of the preceding claims, **characterized in that** a particle filter is assigned to the passage opening (12).

8. Attachment housing according to one of the preceding claims, **characterized in that** the dividing wall (5) comprises, on the side facing the protective compartment (7), an area (13) in which electronic components (4) can be fastened.

9. Attachment housing according to one of the preceding claims, **characterized in that** electrical connections (16) for electrical components (4) installed in the protective compartment (7) are routed through the dividing wall (5) by means of a sealed connection (17).

10. Attachment housing according to one of the preceding claims, **characterized in that** the dividing wall (5) comprises, on the side facing the ventilation compartment (6), at least one fastening device (14) for fastening the attachment housing (1) to an exterior side (2) of an aircraft.

11. Attachment housing according to one of the preceding claims, **characterized in that** the surrounding wall (11) is in the form of a skirt.

12. Attachment housing according to one of the preceding claims, **characterized in that** the surrounding wall (11) is adapted to abut the exterior side (2) of the aircraft in a state mounted on the aircraft.

13. Attachment housing according to one of the preceding claims, **characterized in that** the protective compartment (7) is delimited from the ventilation compartment (6) by the dividing wall (5) and from the surroundings (8) by an air-impermeable housing part (9).

14. Aircraft having an attachment housing attached to an exterior side according to one or more of the preceding claims.

## Revendications

1. Boîtier rapporté (1) destiné à être fixé sur un côté extérieur (2) d'un aéronef, le boîtier rapporté (1) entourant un espace fonctionnel (3), l'espace fonctionnel (3) étant divisé en deux parties et comprenant un espace d'aération (6) et un espace de protection (7), l'espace d'aération (6) étant délimité par rapport à l'environnement (8) au moyen d'une paroi périphérique (11), **caractérisé en ce que** la paroi périphérique (11) présente au moins une ouverture d'aération (10) pour l'échange d'air entre l'espace d'aération (6) et l'environnement (8), une paroi de séparation (5), dans laquelle est prévue au moins une ouverture de passage (12) pour l'échange d'air entre l'espace d'aération (6) et l'espace de protection (7), étant prévue entre l'espace d'aération (6) et l'espace de protection (7), l'ouverture de passage (12) étant configurée de manière à s'opposer à une pénétration d'eau, d'humidité et/ou de particules dans l'espace de protection (7).

2. Boîtier rapporté selon la revendication 1, **caractérisé en ce que**, dans un état monté sur l'aéronef, l'espace d'aération (6) est orienté vers le côté extérieur (2) de l'aéronef et l'espace de protection (7) est orienté dans la direction opposée au côté extérieur (2) de l'aéronef.

3. Boîtier rapporté selon la revendication 2, **caractérisé en ce que** l'espace de protection (7) est disposé à une distance positive du côté extérieur (2) de l'aéronef.

4. Boîtier rapporté selon l'une des revendications précédentes, **caractérisé en ce qu'**une membrane (18) semi-perméable est associée à la ou à chaque ouverture de passage (12).

5. Boîtier rapporté selon l'une des revendications précédentes, **caractérisé en ce que** l'ouverture de passage (12) forme une ouverture à labyrinthe ou un joint labyrinthe.

6. Boîtier rapporté selon l'une des revendications précédentes, **caractérisé en ce qu'**au moins un dispositif de séparation pour la séparation de l'humidité, des liquides et/ou des particules est prévu dans l'ouverture de passage (12).

7. Boîtier rapporté selon l'une des revendications précédentes, **caractérisé en ce qu'**un filtre à particules est associé à l'ouverture de passage (12).

8. Boîtier rapporté selon l'une des revendications précédentes, **caractérisé en ce que** la paroi de séparation (5) comprend, sur le côté orienté vers l'espace de protection (7), une zone (13) dans laquelle des composants (4) électroniques peuvent être fixés.

9. Boîtier rapporté selon l'une des revendications précédentes, **caractérisé en ce que** des liaisons électriques (16) pour des composants (4) électriques installés dans l'espace de protection (7) passent à travers la paroi de séparation (5) au moyen d'un raccord d'étanchéité (17).

10. Boîtier rapporté selon l'une des revendications précédentes, **caractérisé en ce que** la paroi de séparation (5) comprend, sur le côté orienté vers l'espace d'aération (6), au moins un dispositif de fixation (14) pour fixer le boîtier rapporté (1) sur un côté extérieur (2) d'un aéronef.

11. Boîtier rapporté selon l'une des revendications précédentes, **caractérisé en ce que** la paroi périphérique (11) présente la forme d'une jupe.

12. Boîtier rapporté selon l'une des revendications précédentes, **caractérisé en ce que** la paroi périphérique (11) est conçue pour, dans un état monté sur l'aéronef, reposer sur le côté extérieur (2) de l'aéronef.

13. Boîtier rapporté selon l'une des revendications précédentes, **caractérisé en ce que** l'espace de protection (7) est délimité par rapport à l'espace d'aération (6) par la paroi de séparation (5) et par rapport à l'environnement (8) par une partie de boîtier (9) imperméable à l'air.

14. Aéronef pourvu d'un boîtier rapporté fixé sur un côté extérieur selon une ou plusieurs des revendications précédentes.
